# FASCICULE DE BREVET EUROPEEN

(11) **EP 1 999 435 B1**
(45) Date de publication et mention de la délivrance du brevet: **30.05.2012**
(21) Numéro de dépôt: 07731199.1
(22) Date de dépôt: 26.03.2007
(51) Int. Cl.: G01C 23/00

(54) **SYSTEME DE GUIDAGE D'UN AERONEF**
FLUGZEUGLEITSYSTEM
AIRCRAFT GUIDANCE SYSTEM

(30) Priorité: 29.03.2006 FR 0602697
(43) Date de publication de la demande: 10.12.2008
(73) Titulaire: AIRBUS OPERATIONS (SAS), 31060 Toulouse (FR)
(72) Inventeur: MARKITON, Vincent, F-31470 Fontenilles (FR); PEYRUCAIN, Eric, F-31180 Saint Genies Bellevue (FR); BERTIN, Lionel, F-31000 Toulouse (FR); DE MENORVAL, Jean-Louis, F-31840 Aussone (FR)
(74) Mandataire: Hauer, Bernard
(86) Numéro de dépôt international: PCT/FR2007/000516
(87) Numéro de publication internationale: WO 2007/110503

(56) Documents cités:
- US-B1- 6 693 559

## Description

La présente invention concerne un système de guidage d'un aéronef.

Plus précisément, elle concerne un système de guidage du type comportant au moins :
- une base de données comprenant au moins des données relatives au terrain à survoler par l'aéronef ;
- un moyen de sélection actionnable, permettant à un pilote de l'aéronef de sélectionner un mode de guidage particulier ;
- un calculateur déterminant, lors de la sélection d'un mode de guidage, par exemple un mode d'approche, des consignes de guidage dépendant d'au moins une donnée (axe, trajectoire, ...) :
   ■ qui comprend au moins un paramètre particulier (angle d'inclinaison, altitude d'un point géographique, ...) ;
   ■ qui est issue de ladite base de données ; et
   ■ qui doit être utilisée pour ledit mode de guidage sélectionné ; et
- des moyens d'affichage comprenant au moins un écran de visualisation.

La présente invention s'applique notamment à une approche autonome d'une piste d'atterrissage, en particulier dans le domaine militaire. Elle peut également s'appliquer à des programmes civils relatifs à des procédures d'approche, de remise des gaz ou de décollage sans moyen d'aide à l'atterrissage sol de type LS ("Landing System" en anglais) tels que ILS, GLS, MLS, ..., avec une précision et une intégrité élevées, c'est-à-dire avec des niveaux de performance de l'aéronef quasiment aussi contraignants que pour des approches de précision.

Dans le cadre de la présente invention, on considère que lors d'une approche autonome, l'aéronef doit voler en conditions météorologiques de vol aux instruments de type IMC ("Instrument Meteorological Conditions" en anglais), jusqu'à une hauteur de décision, par exemple 200 pieds (environ 60 mètres), qui correspond à la hauteur de décision d'une approche de précision de type ILS ("Instrument Landing System" en anglais, à savoir système d'atterrissage aux instruments), sans utilisation de moyens de navigation situés au sol. Lors d'une telle approche autonome, les moyens de positionnement utilisés par l'aéronef sont donc exclusivement des moyens embarqués, et notamment un système de positionnement par satellites par exemple de type GNSS ("Global Navigation Satellite System" en anglais) tel que Galileo ou GPS ("Global Positioning System" en anglais), une centrale inertielle, et des capteurs barométriques. Il en est de même pour une procédure d'approche, de remise des gaz ou de décollage de type précité.

En approche, à ladite hauteur de décision, l'équipage de l'aéronef doit visuellement acquérir la piste. Si tel est le cas, il finit l'atterrissage en mode visuel à l'aide d'un guidage manuel. En revanche, si à cette hauteur de décision, l'équipage ne voit pas la piste, il doit effectuer une remise des gaz de manière à faire remonter l'aéronef à une altitude de sécurité prédéterminée.

La trajectoire d'approche utilisée pour réaliser une telle approche autonome est créée avant le vol et décrite sur une carte papier qui est à la disposition de l'équipage au cours du vol. Pour ce faire, la configuration du terrain autour de la piste d'atterrissage a été analysée et des marges vis-à-vis des obstacles ont été définis. Cette trajectoire d'approche est également sauvegardée dans ladite base de données du système de guidage.

Aussi, lors d'un vol, lorsque l'équipage décide de voler suivant une approche autonome, ou une procédure d'approche, de remise des gaz ou de décollage avec une précision et une intégrité élevées, il insère la procédure appropriée dans le plan de vol, par l'intermédiaire dudit moyen de sélection qui correspond généralement à un moyen d'interface d'un système de gestion de vol de l'aéronef. Ledit système de gestion de vol crée alors, à partir d'informations issues de la base de données, une trajectoire de référence (correspondant à un axe d'approche virtuel dans le cas d'une approche autonome). A partir de cette trajectoire de référence et de la position courante en trois dimensions de l'aéronef, qui est connue à l'aide de moyens embarqués, ledit calculateur du système de guidage calcule des consignes de guidage qui sont suivies, de façon usuelle, automatiquement par un pilote automatique de l'aéronef ou manuellement par l'équipage à l'aide d'un directeur de vol.

Toutefois, avant de mettre en oeuvre une telle approche autonome, ou une telle procédure d'approche, de remise des gaz ou de décollage avec une précision et une intégrité élevées, l'équipage doit sécuriser la trajectoire de référence utilisée par ledit calculateur pour calculer les consignes de guidage. En effet, cette trajectoire de référence est jugée critique, puisqu'une erreur la concernant amènerait l'aéronef à suivre une mauvaise trajectoire, pour laquelle il existe un risque que l'aéronef sorte d'un domaine de vol sécurisé vis-à-vis des obstacles. Dans ce cas, l'aéronef pourrait entrer en collision avec le relief ou des obstacles extérieurs.

Généralement, pour réaliser une telle sécurisation de la trajectoire de référence, l'équipage compare les informations concernant cette trajectoire de référence qui sont indiquées sur ladite carte papier à sa disposition, à des informations relatives à ladite trajectoire de référence qui sont affichées par ledit calculateur sur l'écran de visualisation des moyens d'affichage.

Toutefois, dans le cadre d'une approche autonome, une telle vérification présente une charge de travail très lourde pour l'équipage, en particulier lorsque l'aéronef est un avion militaire pour lequel la charge de travail est accrue par la situation tactique de ce dernier (possibilité d'être en terrain ennemi avec notamment une obligation de surveiller la présence de menaces éventuelles). La charge de travail d'une telle vérification est lourde, en particulier parce que les données relatives à l'axe d'approche comportent notamment des valeurs de latitude et de longitude d'un point géographique, valeurs qui contiennent chacune un grand nombre de chiffres à vérifier. De plus, la probabilité d'erreurs de la part de l'équipage au moment de la vérification est augmentée dans une telle situation en raison du stress existant alors.

En outre, dans le cadre d'une procédure d'approche, de remise des gaz ou de décollage avec une précision et une intégrité élevées, la comparaison par le pilote des caractéristiques de la procédure par rapport à la carte papier ne permet pas d'atteindre le niveau d'intégrité requis (probabilité d'erreur inférieure à 10⁻⁹ par procédure).

Par ailleurs, par le document US-6 693 559, on connaît un système qui comporte :
- une base de données de navigation ;
- un moyen de sélection actionnable, permettant à un pilote de l'aéronef de sélectionner un mode de guidage particulier ;
- un calculateur déterminant, lors de la sélection d'un mode de guidage, des consignes de guidage ; et
- des moyens d'affichage susceptibles d'afficher notamment un texte alphanumérique.

La présente invention a pour objet de remédier aux inconvénients précités. Elle concerne un système de guidage d'un aéronef, en particulier d'un avion de transport civil ou militaire, qui permet à l'équipage de l'aéronef de surveiller, de façon rapide, sûre et efficace, des données prédéterminées qui sont utilisées lors d'un mode de guidage particulier de l'aéronef (en particulier lors d'une approche autonome) pour déterminer des consignes de guidage de l'aéronef.

A cet effet, selon l'invention, ledit système de guidage du type comportant au moins :
- une base de données de navigation ;
- un moyen de sélection actionnable, permettant à un pilote de l'aéronef de sélectionner un mode de guidage particulier ;
- un calculateur déterminant, lors de la sélection d'un mode de guidage, des consignes de guidage dépendant d'au moins une donnée :
   ■ qui comprend au moins un paramètre particulier ;
   ■ qui est issue de ladite base de données ; et
   ■ qui doit être utilisée pour ledit mode de guidage sélectionné ; et
- des moyens d'affichage comprenant au moins un écran de visualisation, est remarquable en ce que :
- ledit système de guidage comporte des moyens auxiliaires (précisés ci-dessous) pour engendrer une caractéristique d'identification de type alphanumérique, déterminée de préférence à l'aide d'un code de redondance cyclique, et permettant d'identifier ladite donnée qui doit être utilisée pour ledit mode de guidage sélectionné ; et
- lesdits moyens d'affichage sont formés de manière à présenter automatiquement ladite caractéristique d'identification de type alpha-numérique sur ledit écran de visualisation, lors de la sélection dudit mode de guidage.

Ainsi, grâce à l'invention, une donnée (préenregistrée dans la base de données) qui est utilisée par ledit calculateur pour calculer des consignes de guidage de l'aéronef, est affichée sous forme d'une caractéristique d'identification qui est représentée à l'aide d'un code réduit et qui est donc simple et facile à surveiller, comme précisé ci-dessous.

Par conséquent, si une donnée qui est ainsi affichée sous forme d'une caractéristique d'identification sur l'écran de visualisation, est également représentée, sous cette forme, sur une carte papier à la disposition de l'équipage, il est simple et facile à ce dernier de réaliser la vérification précitée consistant à comparer les deux caractéristiques d'identification qui présentent donc chacune un nombre réduit d'éléments alphanumériques (chiffres et/ou lettres).

Dans un mode de réalisation particulier :
- ledit système de guidage comporte de plus :
   ■ au moins un moyen de guidage, par exemple un pilote automatique ou un directeur de vol, qui est destiné à aider au guidage de l'aéronef, en utilisant les consignes de guidage déterminées par ledit calculateur ; et
   ■ un moyen d'armement actionnable, permettant à un pilote de l'aéronef d'armer un mode de guidage sélectionné, de manière à permettre la transmission automatique desdites consignes de guidage dudit calculateur vers ledit moyen de guidage en vue de leur utilisation pour le guidage de l'aéronef ; et
- ledit calculateur est formé de manière à figer ladite donnée utilisée, dès l'armement dudit mode de guidage, et ceci tant que ledit mode de guidage reste armé.

Selon l'invention, lesdits moyens auxiliaires comportent ledit calculateur qui est formé de manière à déterminer automatiquement, à l'aide d'un moyen de codage particulier, lors de la sélection dudit mode de guidage, ladite caractéristique d'identification de type alphanumérique permettant d'identifier ladite donnée qui doit être utilisée pour ledit mode de guidage sélectionné.

En outre, selon l'invention :
- ledit système de guidage est formé de manière à guider l'aéronef au moins lors d'une phase d'approche autonome (telle que précitée) d'une piste, suivant un axe d'approche virtuel ;
- ladite base de données comporte, comme donnée, au moins ledit axe d'approche virtuel qui est défini par une pluralité de paramètres ; et
- ledit calculateur forme une caractéristique d'identification permettant d'identifier lesdits paramètres qui définissent ledit axe d'approche virtuel.

Dans ce cas, avantageusement, ledit axe d'approche est défini par les cinq paramètres suivants : une orientation magnétique, une pente, et une latitude, une longitude et une altitude d'un point d'ancrage (qui est par exemple positionné à 50 pieds au-dessus du sol), et ledit calculateur forme une caractéristique d'identification comportant cinq éléments alphanumériques d'identification (chiffres et/ou lettres) qui identifient respectivement lesdits cinq paramètres.

Par ailleurs, avantageusement, ledit calculateur comprend un moyen de codage employant un code de redondance cyclique de type usuel.

Par ailleurs, dans un autre exemple, lesdits moyens auxiliaires comportent ladite base de données de navigation qui contient ladite caractéristique d'identification de type alphanumérique permettant d'identifier ladite donnée qui doit être utilisée pour ledit mode de guidage sélectionné. De préférence, cette caractéristique d'identification a également été formée à l'aide d'un code de redondance cyclique de type précité.

Dans cet autre exemple, ledit système est formé de manière à guider l'aéronef suivant une trajectoire de référence lors de l'une des phases suivantes (telles que précitées) qui sont de type autonome et présentent une intégrité et une précision élevées : une phase d'approche, une phase de remise des gaz et une phase de décollage, et ladite base de données comporte au moins ladite trajectoire de référence comme donnée, ainsi qu'une caractéristique d'identification permettant d'identifier ladite trajectoire de référence.

Dans ce cas, avantageusement, ledit calculateur est formé de manière à comparer automatiquement ladite trajectoire de référence reçue de ladite base de données à ladite caractéristique d'identification correspondante également reçue de ladite base de données et, si le résultat de cette comparaison indique que ces éléments sont identiques, lesdits moyens d'affichage présentent automatiquement ladite trajectoire de référence et ladite caractéristique d'identification correspondante sur ledit écran de visualisation.

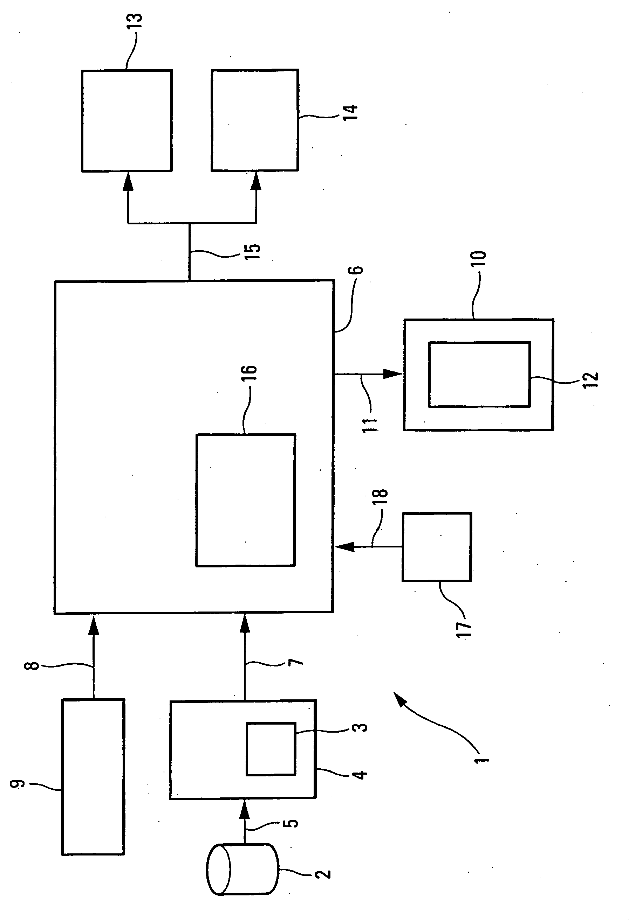

L'unique figure du dessin annexé fera bien comprendre comment l'invention peut être réalisée. Cette figure unique est le schéma synoptique d'un système de guidage conforme à l'invention.

Le système 1 conforme à l'invention et représenté schématiquement sur la figure est destiné à guider un aéronef (non représenté), en particulier un avion de transport militaire ou civil.

Ce système de guidage 1 qui est embarqué, est du type comportant :
- une base de données 2 de navigation, qui comporte au moins des données relatives au terrain à survoler par l'aéronef ;
- un moyen de sélection 3 qui est actionnable, qui permet à un pilote de l'aéronef de sélectionner un mode de guidage particulier, et qui fait, par exemple, partie d'un système de gestion de vol 4 usuel, de type FMS ("Flight Management System" en anglais), qui peut être relié par l'intermédiaire d'une liaison 5 à ladite base de données 2 ;
- un calculateur 6, par exemple un calculateur de guidage de vol de type FG ("Flight Guidance" en anglais), qui est relié par l'intermédiaire d'une liaison 7 audit système de gestion de vol 4 et par l'intermédiaire d'une liaison 8 à un ensemble 9 de sources d'informations. Cet ensemble 9 n'est pas précisé davantage, mais comporte par exemple un moyen pour déterminer la position courante en trois dimensions de l'aéronef au cours du vol ;
- des moyens d'affichage 10 qui sont reliés par l'intermédiaire d'une liaison 11 audit calculateur 6 et qui sont susceptibles d'afficher des informations sur un écran de visualisation 12 ; et
- des moyens de guidage usuels, par exemple un pilote automatique 13 et un directeur de vol 14, qui sont reliés par l'intermédiaire d'une liaison 15 audit calculateur 6 et qui sont destinés à aider au guidage de l'aéronef, en utilisant des consignes de guindage qui sont déterminées par ledit calculateur 6.

Le calculateur 6 détermine, lors de la sélection d'un mode de guidage particulier à l'aide dudit moyen de sélection 3, des consignes de guidage qui sont relatives à ce mode de guidage particulier et qui dépendent au moins d'une donnée (trajectoire, profil, position, ...) :
- qui comprend au moins un paramètre particulier (permettant de définir ou caractériser cette donnée) ;
- qui est issue de ladite base de données 2 ; et
- qui doit être utilisée pour ledit mode de guidage sélectionné à l'aide dudit moyen de sélection 3.

Afin de permettre à l'équipage de l'aéronef de surveiller, de façon rapide et sûre, des données prédéterminées qui sont utilisées par ledit calculateur 6 pour déterminer les consignes de guidage lors d'un mode de guidage particulier, lesdits moyens d'affichage 10 sont formés, selon l'invention, de manière à présenter automatiquement, sur ledit écran de visualisation 12, une caractéristique d'identification de type alphanumérique permettant d'identifier au moins une donnée qui doit être utilisée pour ledit mode de guidage sélectionné.

Ainsi, le système 1 conforme à l'invention affiche, par l'intermédiaire desdits moyens d'affichage 10, sous forme d'une caractéristique d'identification, au moins une donnée (précisée ci-dessous) qui est préenregistrée dans la base de données 2 et qui est utilisée par le calculateur 6 pour calculer les consignes de guidage de l'aéronef. De plus, cette caractéristique d'identification est présentée sous forme d'un code réduit (de type alphanumérique) de manière à pouvoir être surveillée de façon rapide et sûre.

En outre, si une donnée qui est ainsi affichée sur l'écran de visualisation 12 sous forme d'une caractéristique d'identification, est également représentée sous cette même forme sur un autre support, par exemple sur une carte papier, qui est à la disposition de l'équipage, il est simple et facile à l'équipage de l'aéronef de vérifier si la donnée affichée et utilisée par le calculateur 6 est bien conforme à la donnée requise qui est présentée sur cet autre support. Une telle comparaison peut être réalisée de façon simple et rapide, puisque chacune des deux caractéristiques d'identification présente un nombre réduit d'éléments alphanumériques, c'est-à-dire un nombre réduit de chiffres et/ou de lettres, comme précisé ci-dessous.

Bien entendu, si l'équipage doit vérifier une pluralité de données qui sont utilisées simultanément par le calculateur 6 pour calculer des consignes de guidage, le système 1 prévoit une caractéristique d'identification pour chacune de ces données, et les moyens d'affichage 10 affichent simultanément toutes ces caractéristiques d'identification.

Chaque donnée peut comporter un seul paramètre ou une pluralité de paramètres. Dans ce dernier cas, on réalise un codage pour chacun des différents paramètres, en particulier à l'aide d'un moyen de codage 16 qui est par exemple intégré dans ledit calculateur 6, et la caractéristique d'identification résultante comporte une pluralité d'éléments correspondant respectivement à ces différents paramètres. Dans un mode de réalisation préféré, ledit moyen de codage 16 emploie un code de redondance cyclique de type usuel. Dans un mode de réalisation particulier, la méthode de codage utilisée par ce moyen de codage 16 doit garantir une probabilité d'erreur (de codage) prédéterminée, par exemple 10⁻⁹.

Par ailleurs, selon l'invention, ledit système de guidage 1 est formé de manière à pouvoir guider l'aéronef au moins lors d'une phase d'approche autonome d'une piste. Comme indiqué précédemment, une telle phase d'approche peut être réalisée suivant un axe d'approche virtuel qui est défini avant le vol, afin d'assurer une enveloppe de protection de la trajectoire de l'aéronef vis-à-vis des obstacles et du relief du terrain survolé. On sait qu'un tel axe d'approche virtuel est matérialisé par :
- un point d'ancrage, pour lequel il est nécessaire de connaître la latitude, la longitude et l'altitude ;
- une orientation magnétique ; et
- une valeur de pente.

Dans ce cas, ledit calculateur 6 est formé de manière à déterminer automatiquement, à l'aide du moyen de codage intégré 16, lors de la sélection dudit mode de guidage, une caractéristique d'identification de type alphanumérique permettant d'identifier ladite donnée qui doit être utilisée pour ledit mode de guidage sélectionné.

Selon l'invention, la donnée à coder représente donc ledit axe d'approche virtuel, et elle comporte cinq paramètres, à savoir l'orientation magnétique, la pente, la latitude du point d'ancrage, la longitude de ce point d'ancrage, et l'altitude dudit point d'ancrage. Ainsi, le calculateur 6 forme une caractéristique d'identification qui comporte de préférence cinq éléments alphanumériques d'identification, par exemple cinq chiffres ou cinq lettres, qui identifient respectivement les cinq paramètres précédents.

En outre, selon l'invention, le codage précité est réalisé à deux niveaux :
- avant le vol, lors de la définition au sol dudit axe d'approche virtuel. La caractéristique d'identification déterminée alors est retranscrite sur une carte d'approche (qui est à la disposition de l'équipage de l'aéronef au cours du vol qui suit) ; et
- pendant le vol, par le calculateur 6, à l'aide notamment des informations reçues de ladite base de données 2. La caractéristique d'identification déterminée par ledit calculateur 6 est affichée sur l'écran de visualisation 12, comme indiqué précédemment.

Par conséquent, selon l'invention, lorsque, au cours d'un vol de l'aéronef, l'équipage sélectionne à l'aide du moyen de sélection 3 du système de gestion de vol 4 une approche autonome, cette dernière est insérée dans le plan de vol de l'aéronef, et le système de gestion de vol 4 extrait de la base de données 2 les paramètres qui définissent l'axe virtuel d'approche associé à cette approche autonome. Ces paramètres sont transmis par le système de gestion de vol 4 au calculateur 6 qui calcule alors la caractéristique d'identification correspondante, et l'affiche sur l'écran de visualisation 12. A ce moment, l'équipage doit réaliser une première vérification de cette caractéristique d'identification, en la comparant à celle qui est indiquée sur la carte d'approche à sa disposition. Lorsque l'approche autonome est finalement autorisée, par exemple par un contrôleur aérien situé au sol, l'équipage arme l'approche autonome à l'aide d'un moyen d'armement 17 qui est relié par l'intermédiaire d'une liaison 18 audit calculateur 6, c'est-à-dire qu'il couple le pilote automatique 13 et/ou le directeur de vol 14 aux consignes de guidage de l'approche autonome, déterminées par le calculateur 6. Ces consignes de guidage sont calculées à partir des paramètres précités définissant l'axe d'approche virtuel, ainsi que de la position courante en trois dimensions de l'aéronef, reçue dudit ensemble 9. A ce moment, par procédure, l'équipage doit vérifier à nouveau la caractéristique d'identification affichée sur au moins ledit écran de visualisation 12 avec celle de la carte d'approche. En parallèle, le calculateur 6 fige les paramètres utilisés concernant l'axe d'approche de sorte que ces paramètres ne peuvent plus être modifiés tant que l'approche restera armée ou engagée. Si l'équipage souhaite mettre en oeuvre une nouvelle approche, il devra désengager l'approche en cours, avant de sélectionner une nouvelle approche à l'aide du moyen de sélection 3.

Par ailleurs, dans un autre example, ledit système de guidage 1 est formé de manière à guider l'aéronef suivant une trajectoire de référence lors de l'une des phases suivantes : une phase d'approche, une phase de remise des gaz et une phase de décollage. Ces phases sont autonomes dans le domaine civil et présentent une intégrité et une précision élevées. Dans ce cas, ladite base de données 2 comporte au moins ladite trajectoire de référence comme donnée, ainsi qu'une caractéristique d'identification permettant d'identifier cette trajectoire de référence. Cette caractéristique d'identification est déterminée par les concepteurs de procédures et intégrée dans la base de données de navigation 2 avec la procédure concernée qui contient l'ensemble des éléments nécessaires pour définir la trajectoire de référence (points de route ["waypoints" en anglais], trajectoires entre les points de route successifs, pentes, ...). Cette caractéristique d'identification est vérifiée automatiquement par le calculateur 6 (calculateur de guidage de vol) qui présente un niveau d'intégrité très élevé, à chaque fois que la trajectoire de référence est transmise. Cette trajectoire de référence ainsi que la caractéristique d'identification correspondante sont également affichées pour être vérifiées par le pilote.

L'objectif de la caractéristique d'identification est de garantir avec un bon niveau de probabilité, l'ensemble des paramètres qui définissent la trajectoire de référence utilisée par le calculateur 6 lors d'une procédure d'approche, de remise des gaz ou de décollage, et ainsi de faire assurer la sécurisation de la trajectoire de référence à l'équipage à travers ce nouveau paramètre. La caractéristique d'identification est déterminée en utilisant une méthode de codage de caractéristique d'identification, qui est appliquée sur chacun des paramètres de la trajectoire de référence à sécuriser. La méthode de codage doit garantir une probabilité d'erreur de 10⁻⁹ pour les paramètres de la trajectoire de référence.

On notera que la trajectoire de référence est définie par les concepteurs de procédures, de façon à obtenir des marges prédéterminées par rapport aux obstacles et au relief du terrain. La trajectoire de référence est donc matérialisée, de façon usuelle, par une succession de points de route (identifiés en longitude, latitude et altitude) et de segments droits ou courbes. Elle est sauvegardée dans la base de données 2 et est sélectionnable avec sa caractéristique d'identification.

Dans le cadre d'une procédure d'approche, de remise des gaz ou de décollage avec une précision et une intégrité élevées, les paramètres de la trajectoire de référence sont transmis par le système de gestion de vol 4 (à partir de la base de données 2) au calculateur (de guidage de vol) 6. Il en est de même de la caractéristique d'identification correspondante. Le calculateur (de guidage de vol) 6 vérifie alors la cohérence entre cette caractéristique d'identification et les paramètres de la trajectoire de référence. Si la vérification est concluante, la trajectoire est validée, et le pilote peut s'y asservir grâce aux moyens de guidage. Dans le cas contraire, la trajectoire de référence est invalidée, ce qui interdit de faire voler l'aéronef le long de cette trajectoire de référence avec les moyens de guidage.

## Revendications

1. Système de guidage d'un aéronef, ledit système de guidage (1) comportant au moins :
- une base (2) de données de navigation ;
- un moyen de sélection (3) actionnable, configuré pour permettre à un pilote de l'aéronef de sélectionner un mode de guidage particulier ;
- un calculateur (6) configuré pour déterminer, lors de la sélection d'un mode de guidage, des consignes de guidage dépendant d'au moins une donnée :
. qui comprend au moins un paramètre particulier permettant de définir cette donnée ;
. qui est issue de ladite base de données ; et
. qui doit être utilisée pour ledit mode de guidage sélectionné ; et
- des moyens d'affichage (10) comprenant au moins un écran de visualisation (12),
**caractérisé en ce que**: - ladite donnée est l'axe d'approche virtuel ; - ledit mode de guidage sélectionné est une phase d'approche autonome d'une piste ;
- ledit système de guidage (1) comporte des moyens auxiliaires comprenant ledit calculateur (6) déterminer automatiquement, à l'aide d'un moyen de codage (16) particulier, lors de la sélection dudit mode de guidage, une caractéristique d'identification de type alphanumérique permettant d'identifier un axe d'approche virtuel pour guider l'aéronef au moins lors d'une phase d'approche autonome d'une piste, suivant cet axe d'approche virtuel ;
- ladite base de données (2) comporte, comme donnée, au moins ledit axe d'approche virtuel qui est défini par les cinq paramètres suivants : une orientation magnétique, une pente, et une latitude, une longitude et une altitude d'un point d'ancrage ;
- ledit calculateur est configuré pour (6) former une caractéristique d'identification comportant cinq éléments alphanumériques d'identification qui identifient respectivement lesdits cinq paramètres ; et
- lesdits moyens d'affichage sont configurés pour (10) présenter automatiquement ladite caractéristique d'identification de type alphanumérique sur ledit écran de visualisation (12), lors de la sélection dudit mode de guidage.

2. Système selon la revendication 1,
**caractérisé en ce que** :
- ledit système de guidage (1) comporte de plus :
. au moins un moyen de guidage (13, 14) configuré pour aider au guidage de l'aéronef, en utilisant les consignes de guidage déterminées par ledit calculateur (6) ; et
. un moyen d'armement (17) actionnable, configuré pour permettre à un pilote de l'aéronef d'armer un mode de guidage sélectionné, de manière à permettre la transmission automatique desdites consignes de guidage dudit calculateur (6) vers ledit moyen de guidage (13, 14) en vue de leur utilisation pour le guidage de l'aéronef ; et
- ledit calculateur (6) est configuré pour figer ladite donnée utilisée, dès l'armement dudit mode de guidage, et ceci tant que ledit mode de guidage reste armé.

3. Système selon l'une des revendications 1 et 2,
**caractérisé en ce que** ledit calculateur (6) comprend un moyen de codage (16) employant un code de redondance cyclique.

4. Aéronef,
**caractérisé en ce qu'**il comporte un système de guidage (1) tel que celui spécifié sous l'une des revendications 1 à 3.

## Claims

1. An aircraft guidance system, said guidance system (1) comprising at least:
- a navigation database (2);
- an operable selection means (3)formed for enabling a pilot of the aircraft to select a particular guidance mode;
- a computer (6) formed for determining, when a guidance mode is selected, guidance instructions depending on at least one data item:
• which comprises at least one particular parameter enabling this data item to be defined;
• which is obtained from said database; and
• which must be used for said selected guidance mode; and
- display means (10) comprising at least one display screen (12),
**characterized in that**:
- said data item is a virtual approach axis;
- said selected guidance mode is an autonomous runway approach phase;
- said guidance system (1) includes auxiliary means including said computer (6) which is formed for automatically determining, using a particular encoding means (16), when said guidance mode is selected, a identification characteristic of alphanumeric type making it possible to identify a virtual mode approach axis for guiding the aircraft at least in an autonomous runway approach phase, along this virtual approach axis;
- said database (2) includes, as data, at least said virtual approach axis which is defined by the following five parameters: a magnetic orientation, a gradient, and a latitude, a longitude and an altitude of an anchor point;
- said computer (6) is formed for forming an identification characteristic comprising five alphanumeric identification elements which respectively identify said five parameters; and
- said display means (10) are formed for automatically presenting said identification characteristic of alphanumeric type on said display screen (12), when said guidance mode is selected.

2. The system as claimed in claim 1,
**characterized in that**:
- said guidance system (1) also comprises:
• at least one guidance means (13, 14) formed for helping in guiding the aircraft, by using the guidance instructions determined by said computer (6); and
• an operable engaging means (17), formed for enabling a pilot of the aircraft to engage a selected guidance mode, so as to allow for the automatic transmission of said guidance instructions from said computer (6) to said guidance means (13, 14) in order for them to be used for the guidance of the aircraft; and
- said computer (6) is formed for fixing said data item used, immediately said guidance mode is engaged, and as long as said guidance mode remains engaged.

3. The system as claimed in one of claims 1 and 2,
**characterized in that** said computer (6) comprises an encoding means (16) employing a cyclic redundancy code.

4. An aircraft,
**characterized in that** it comprises a guidance system (1) such as that specified under claims 1 to 3.

## Patentansprüche

1. System zum Leiten eines Luftfahrzeugs, wobei das besagte Leitsystem (1) zumindest folgendes umfasst:
- eine Navigationsdatenbank (2);
- eine betätigbare Auswahlvorrichtung (3), die konfiguriert ist, um es einem Piloten des Luftfahrzeugs zu ermöglichen, einen besonderen Leitmodus anzuwählen;
- einen Rechner (6), der konfiguriert ist, um bei der Auswahl eines Leitmodus Leitvorgaben zu bestimmen, die von zumindest einem Datum abhängig sind:
• das zumindest einen besonderen Parameter umfasst, mit dem dieses Datum definiert werden kann;
• das aus der besagten Datenbank stammt; und
• das für den besagten ausgewählten Leitmodus zu verwenden ist; und
- Anzeigevorrichtungen (10) umfassend zumindest einen Visualisierungsbildschirm (12),
**dadurch gekennzeichnet, dass**:
- das besagte Datum die virtuelle Annäherungsachse ist;
- der besagte ausgewählte Leitmodus eine autonome Annäherungsphase an eine Piste ist;
- der besagte Leitmodus (1) Hilfsvorrichtungen enthält, umfassend den besagten Rechner (6), der konfiguriert ist, um bei der Auswahl des besagten Leitmodus automatisch, und mithilfe einer gesonderten Codiervorrichtung (16) ein alphanumerisches Identifizierungsmerkmal zu bestimmen, mit dem eine virtuelle Annäherungsachse ausgemacht werden kann, um das Luftfahrzeug, zumindest in einer Phase der autonomen Annäherung an eine Piste, entlang dieser virtuellen Annäherungsachse zu leiten;
- die besagte Datenbank (2) als Datum zumindest die besagte virtuelle Annäherungsachse umfasst, die durch die folgenden fünf Parameter definiert wird: eine magnetische Ausrichtung, eine Neigung, eine geografische Breite und Länge und eine Höhe eines Verankerungspunktes;
- der besagte Rechner (6) konfiguriert ist, um ein Identifizierungsmerkmal umfassend fünf alphanumerische Identifizierungselemente zu bilden, die jeweils die besagten fünf Parameter identifizieren; und
- die besagten Anzeigevorrichtungen (10) konfiguriert sind, um bei der Auswahl des besagten Leitmodus automatisch das besagte alphanumerische Identifizierungsmerkmal auf dem besagten Visualisierungsbildschirm (12) anzuzeigen.

2. System nach Anspruch 1,
**dadurch gekennzeichnet, dass**:
- das besagte Leitsystem (1) zusätzlich umfasst:
• zumindest eine konfigurierte Leitvorrichtung (13, 14) zur Unterstützung der Leitung des Luftfahrzeugs unter Verwendung der durch den besagten Rechner (6) bestimmten Leitvorgaben; und
• eine betätigbare Aktivierungsvorrichtung (17), die konfiguriert ist, um es einem Piloten des Luftfahrzeugs zu ermöglichen, einen ausgewählten Leitmodus zu aktivieren, sodass die automatische Übertragung der besagten Leitvorgaben des besagten Rechners (6) zu den besagten Leitvorrichtungen (13, 14) ermöglicht wird, damit sie zum Leiten des Luftfahrzeuges verwendet werden; und
- der besagte Rechner (6) konfiguriert ist, um das besagte verwendete Datum sofort nach Aktivierung des besagten Leitmodus einzufrieren, und dies solange, wie der besagte Leitmodus aktiviert bleibt.

3. System nach einem der Ansprüche 1 und 2,
**dadurch gekennzeichnet, dass** der besagte Rechner (6) eine Codiervorrichtung (16) umfasst, die einen Code mit zyklischer Redundanz anwendet.

4. Luftfahrzeug,
**dadurch gekennzeichnet, dass** es ein Leitsystem (1) umfasst, wie es in einem der Ansprüche 1 bis 3 spezifiziert ist.
